# FASCICULE DE BREVET EUROPEEN

(11) **EP 1 617 535 B1**
(45) Date de publication et mention de la délivrance du brevet: **06.10.2010**
(21) Numéro de dépôt: 05291166.6
(22) Date de dépôt: 31.05.2005
(51) Int. Cl.: H02G 3/06

(54) **Dispositif d'angle plat ou de dérivation adaptable à différents angles formés entre des goulottes**
Flacheckverbindungs- oder Abzweigungseinrichtung passend für verschiedene Rinnenecken
Flat angle or derivation device adaptable for different angles formed between cable ducts

(30) Priorité: 15.07.2004 FR 0407872
(43) Date de publication de la demande: 18.01.2006
(73) Titulaire: Legrand France, 87000 Limoges (FR); Legrand SNC, 87000 Limoges (FR)
(72) Inventeur: Adam, Damien, 72240 Domfront en Champagne (FR); Bellanger, Jérôme, 72000 Le Mans (FR)
(74) Mandataire: Orsini, Fabienne

(56) Documents cités:
- EP-A- 0 578 459
- EP-A- 1 263 105

## Description

### DOMAINE TECHNIQUE AUQUEL SE RAPPORTE L'INVENTION

Cette invention concerne, de manière générale, un dispositif d'angle plat ou de dérivation à disposer entre les socles d'au moins deux tronçons de goulotte formant entre eux un angle dans un même plan support.

Plus particulièrement, elle concerne un dispositif comprenant une platine pour joindre les fonds desdits socles qui comporte une partie centrale et au moins une partie latérale rattachée à la partie centrale par au moins une liaison souple pour être mobile par rapport à ladite partie centrale.

### ARRIERE-PLAN TECHNOLOGIQUE

On connaît déjà du document EP 578 459 un dispositif de ce type dans lequel la partie centrale et la partie latérale sont issues d'une même pièce plate monobloc découpée et pliée, la liaison souple étant constituée par un coude reliant deux retours en équerre, à savoir un retour en équerre appartenant à la partie centrale et un retour en équerre appartenant à la partie latérale.

Dans ce dispositif, il est prévu en outre un système de verrouillage comprenant des boulons associés à des écrous vissés dans des ouvertures des parties centrale et latérale mises en correspondance pour bloquer la position relative desdites parties centrale et latérale.

Ainsi, avant de positionner le dispositif d'angle entre les socles de goulotte, l'installateur doit ajuster la position angulaire relative des parties centrale et latérale à la position angulaire relative desdits socles en pliant plus ou moins ledit coude pour déplacer ladite partie latérale par rapport à ladite partie centrale, puis il doit bloquer en position les parties centrale et latérale grâce au système de verrouillage.

Un tel dispositif d'angle est complexe à réaliser et à installer.

En outre, il présente comme inconvénient majeur le fait que la position relative des parties centrale et latérale du dispositif ne s'ajuste pas automatiquement à la position relative des socles de goulotte, ainsi l'installateur doit estimer cette position relative pour adapter ledit dispositif d'angle avant son montage entre lesdits socles ce qui est long et fastidieux en cours de chantier.

### OBJET DE L'INVENTION

Afin de remédier aux inconvénients de l'état de la technique, l'invention propose un dispositif d'angle plat ou de dérivation tel que défini en introduction, caractérisé en ce que ladite partie centrale comprend des aménagements pour être fixée au plan support et en ce que ladite platine est agencée pour que ladite partie latérale reste mobile par rapport à ladite partie centrale après fixation de celle-ci au plan support de sorte qu'elle est apte à se plaquer automatiquement contre un bord coupé d'un desdits socles.

D'autres caractéristiques avantageuses et non limitatives du dispositif selon l'invention sont les suivantes :
- il est prévu deux parties latérales mobiles situées sur les deux côtés latéraux de la partie centrale,
- chaque partie latérale est rattachée à la partie centrale par deux liaisons souples,
- la platine est une pièce monobloc moulée dont sont issues la partie centrale, chaque partie latérale et chaque liaison souple,
- chaque partie latérale présente une forme en L dont une des branches, rattachée par chaque liaison souple à ladite partie centrale, est adaptée à se plaquer automatiquement contre un bord coupé d'un desdits socles,
- ladite platine porte des talons souples destinés à venir en appui contre une paroi disposée en équerre par rapport audit plan support,
- ladite partie centrale comporte des trous de fixation prévus dans le fond de bossages faisant saillie sur la face arrière de ladite partie centrale,
- chaque liaison souple est réalisée par une patte en forme de U inversé,
- ledit dispositif comporte un cache à rapporter sur ladite platine, le cache et ladite platine comportant des moyens d'encliquetage complémentaires adaptés à coopérer entre eux,
- ledit cache est constitué de deux demi-caches comprenant chacun lesdits moyens d'encliquetage adaptés à coopérer avec ceux de la platine,
- ledit cache comporte d'autres moyens d'encliquetage équivalents à ceux d'un couvercle de fermeture adaptés à coopérer avec des moyens de montage prévus dans les retours d'ailes latérales des socles de goulotte, et
- ladite partie centrale comprend deux zones reliées par au moins une charnière et une desdites zones est prise en sandwich entre une branche de chaque partie latérale et au moins une nervure portée par celle-ci.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective de dessus de la platine d'un mode de réalisation d'un dispositif d'angle plat ou de dérivation selon l'invention ;
- la figure 2 est une vue schématique de dessous de la platine de la figure 1 ;
- la figure 3 est une vue schématique en perspective de la platine de la figure 1 positionnée entre deux socles de goulotte ;
- la figure 4A est une vue schématique en perspective d'un des demi-caches de fermeture du dispositif d'angle ou de dérivation selon l'invention ;
- la figure 4B est une vue de dessous du demi-cache de la figure 4A ;
- la figure 5A est une vue schématique en perspective de l'autre demi-cache de fermeture du dispositif d'angle ou de dérivation selon l'invention ;
- la figure 5B est une vue de dessous du demi-cache de la figure 5A ;
- la figure 6 est une vue en coupe selon le plan A-A du dispositif d'angle plat ou de dérivation de la figure 3 fermé par son cache et positionné contre une paroi à l'équerre du plan support des socles de goulotte ; et
- la figure 7 est une vue en coupe selon le plan B-B du dispositif d'angle plat ou de dérivation de la figure 3 fermé par son cache et positionné contre une paroi à l'équerre du plan support des socles de goulotte.

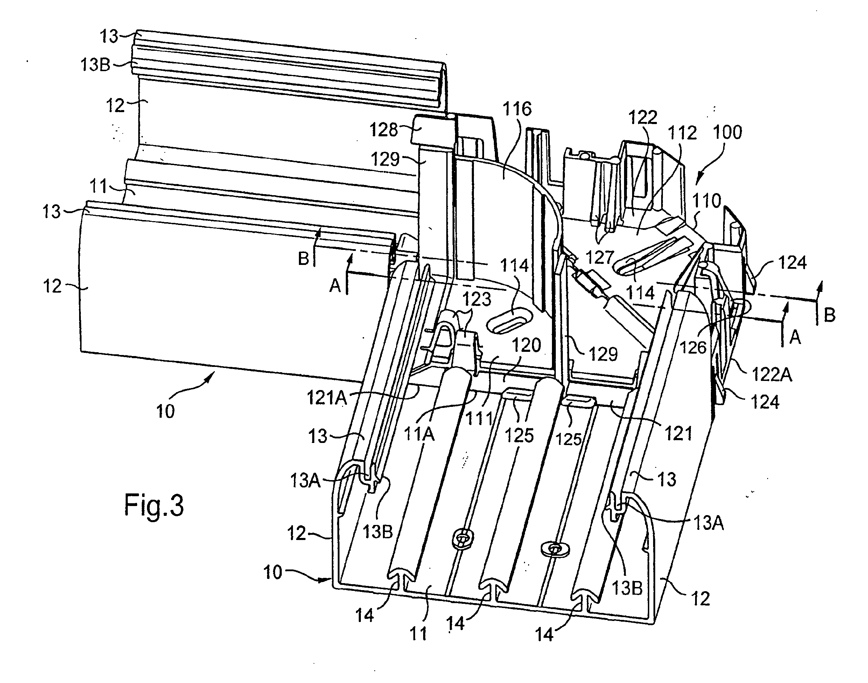

Sur la figure 3 on a représenté un dispositif d'angle plat disposé entre les socles 10 de deux tronçons de goulotte formant entre eux un angle sur un même plan support (non représenté).

De manière connue en soi, chaque socle 10 de goulotte est un profilé à section en U avec un fond 11 bordé longitudinalement par deux ailes latérale 12 parallèles. Chaque aile latérale 12 comporte en tête un retour 13, ici en équerre, dirigé vers l'intérieur du socle 10. Chaque socle 10 présente une ouverture frontale longitudinale définie entre les retours 13 en équerre dirigés l'un vers l'autre desdites ailes latérales 12. Cette ouverture frontale longitudinale est destinée à être fermée par un couvercle de fermeture (non représenté) monté sur le socle 10. À cet effet, chaque retour 13 en équerre de chaque aile latérale 12 comprend des moyens de montage d'un couvercle de fermeture. Ici, ces moyens de montage comprennent une rainure longitudinale 13A formée dans ledit retour 13 et un bourrelet d'encliquetage 13B qui court le long de ladite rainure longitudinale 13A, à l'extérieur de celle-ci.

Classiquement, chaque couvercle de fermeture (non représenté) comporte en correspondance de ces moyens de montage, d'une part, deux languettes d'engagement s'étendant le long de ses deux bords longitudinaux, chaque languette d'engagement étant destinée à s'engager dans une rainure longitudinale 13A d'un retour 13 d'une aile latérale 12 du socle 10 correspondant, et, d'autre part, à l'intérieur desdites languettes d'engagement, le long de celles-ci, deux languettes d'encliquetage portant des dent d'encliquetage, chaque dent d'encliquetage étant destinée à s'accrocher à un bourrelet d'encliquetage 13B d'un retour 13 d'une aile latérale 12 du socle 10 correspondant.

Le dispositif d'angle plat représenté comprend une platine 100 pour joindre les fonds 11 des socles 10 de goulotte ainsi qu'un cache 130,140 à rapporter sur ladite platine 100 pour fermer l'angle formé entre lesdits socles 10 et établir une continuité de couvercles entre les couvercles de fermeture desdits socles 10 fermés.

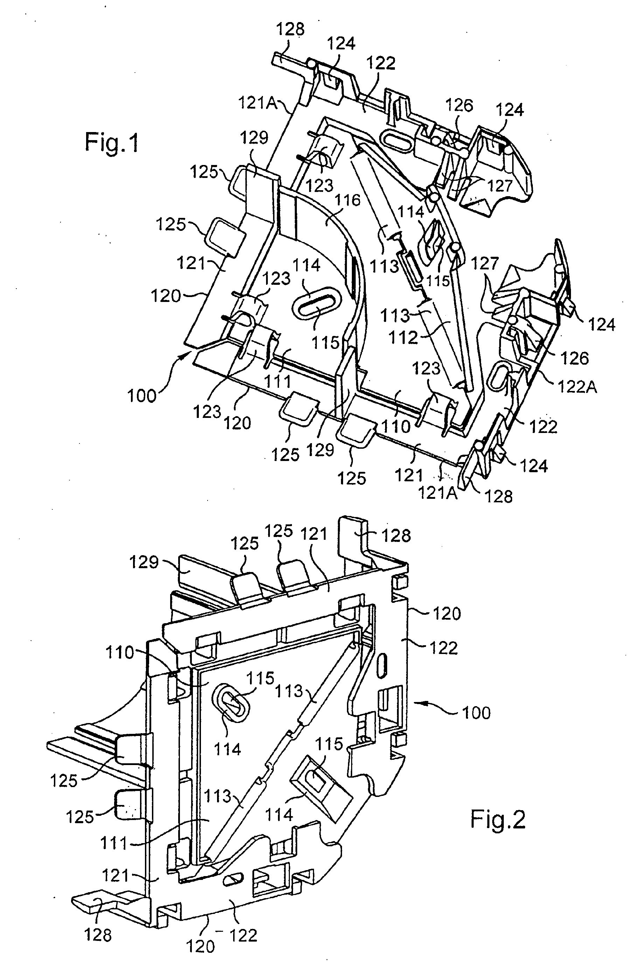

Comme le montrent plus particulièrement les figures 1 et 2, la platine 100 comporte une partie centrale 110 et au moins une partie latérale 120 rattachée à la partie centrale 100 par au moins une liaison souple 123 pour être mobile par rapport à ladite partie centrale 100. Chaque liaison souple 123 est réalisée ici par une patte en forme de U inversé, une extrémité de ladite patte étant liée à la partie centrale 110 et l'autre extrémité de ladite patte étant liée à la partie latérale 120 correspondante.

Ici, la partie centrale 110 de ladite platine 100 présente une forme globalement carrée avec deux bords latéraux adjacents destinés à être positionnés sensiblement parallèlement aux bords d'extrémité coupés 11A des socles 10 placés en angle sur ledit plan support (non représenté).

Selon l'exemple représenté, il est prévu deux parties latérales 120 mobiles situées sur les deux bords latéraux de la partie centrale 110 parallèles aux bords d'extrémité coupés 11A des socles 10 de goulotte.

Chaque partie latérale 120 présente globalement une forme en L qui s'étend à partir du coin de ladite partie centrale 110 destiné à être situé à l'intérieur de l'angle formé par lesdits socles 10, le long de deux bords à angle droit de la partie centrale 110 de ladite platine 100.

Avantageusement, la partie centrale 110 de la platine 100 comprend des aménagements 114,115 pour être fixée au plan support et ladite platine 100 est agencée pour que chaque partie latérale 120 reste mobile par rapport à ladite partie centrale 110 après fixation de celle-ci au plan support de sorte que chaque partie latérale 120 est apte à se plaquer automatiquement contre un bord coupé 11A d'un desdits socles10.

Plus particulièrement, une des branches 121 de chaque partie latérale 120 de la platine 100 est rattachée par chaque liaison souple 123 à ladite partie centrale 110 et est adaptée à se plaquer automatiquement contre un bord coupé 11A d'un desdits socles 10. Ici, la branche 121 correspondante de chaque partie latérale est rattachée à la partie centrale 110 par deux liaisons souples 123 identiques. L'autre des branches 122 de chaque partie latérale 120 n'est pas rattachée à la partie centrale 110 de la platine 100 et est donc libre par rapport à celle-ci.

Chaque partie latérale 120, globalement en forme de L, est plate de façon à pouvoir se glisser en partie sous la partie centrale 110 de la platine 100. Pour autoriser ce glissement partiel de chaque partie latérale 120 sous la partie centrale 110 de la platine 100, ladite partie centrale 110 comporte des trous de fixation 115, ici de forme oblongue, prévus dans le fond de bossages 114 faisant saillie de la face arrière de ladite partie centrale 110 (voir figure 2). L'épaisseur des bossages 114 est juste supérieure à l'épaisseur desdites parties latérales 120 de la platine 100. Ainsi, lorsque la platine 100 est fixée au plan support par l'intermédiaire de vis ou de tout autre moyen d'ancrage inséré dans ledit plan support au travers desdits trous de fixation 115 de la partie centrale 110, il subsiste un espace entre la face arrière de la partie centrale 110 et le plan support, espace dans lequel peuvent s'engager lesdites parties latérales 120 pour glisser légèrement sous ladite partie centrale 110.

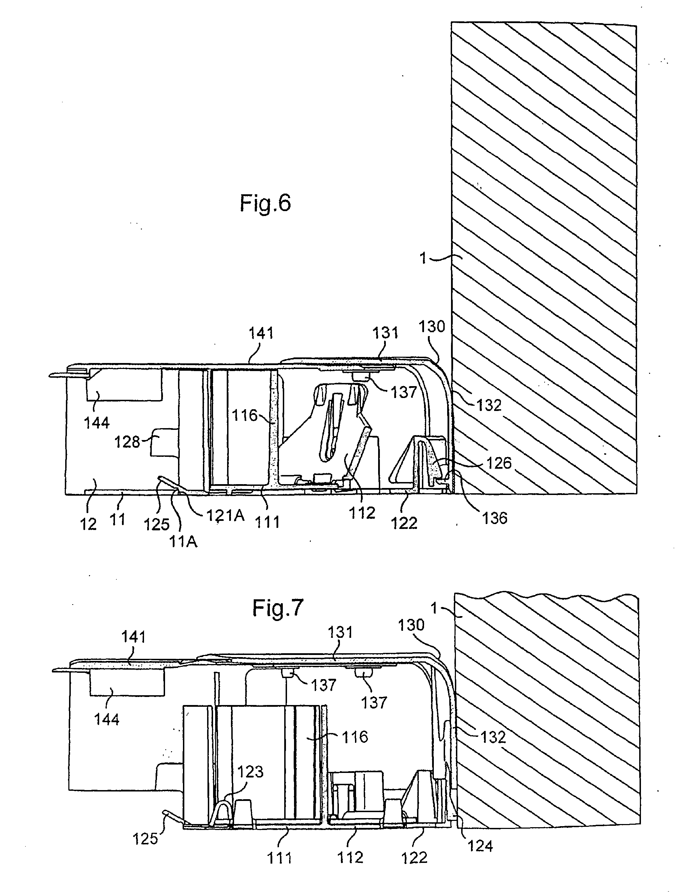

Par ailleurs, ladite platine 100 porte des talons souples 124 destinés à venir en appui contre une paroi 1 disposée en équerre par rapport audit plan support (voir en particulier la figure 7).

Plus particulièrement, comme le montre la figure 1, il est prévu que chaque branche 122 libre de chaque partie latérale 120 porte, à chacune de ses extrémités, un talon souple 124 qui fait saillie du bord extérieur 122A de ladite branche 122.

L'autre branche 121 liée de chaque partie latérale 120 porte deux languettes 125 qui font saillie de son bord extérieur 121A. Comme le montre plus particulièrement la figure 3, ces languettes 125 sont destinées à venir se plaquer contre le fond 11 des socles 10 de goulotte lors de la mise en place du dispositif d'angle plat entre lesdits socles 10 disposés en angle. Elles participent au maintien de ladite platine 100 sur lesdits socles 10.

Il est prévu, à la jonction des deux branches 121,122 de chaque partie latérales 120 de la platine 100, une languette 128 qui s'étend selon la direction longitudinale de la branche 122 libre de la partie latérale 120 correspondante, en saillie du bord extérieur 121A de l'autre branche 121 liée de ladite partie latérale 120. Cette languette 128 est destinée à venir se placer contre la face interne d'une aile latérale 12 du socle 10 correspondant et elle participe également avec lesdites languettes 125 au maintien en position de la platine 100 par rapport aux socles 10.

Comme le montrent les figures 1 et 3 la partie centrale 110 de la platine 100 porte sur sa face avant une cloison 116 en arc de cercle qui est prolongée par deux cloisons droites 129 portées par les faces avant des branches 121 liées desdites parties latérales 120. Ces cloisons 116,129 sont destinées à établir une continuité de parois entre des cloisons de fractionnement (non représentées) rapportées sur des nervures 14 portées par les fonds 11 des socles 10 de goulotte. De cette manière, avantageusement, le dispositif d'angle plat permet d'assurer le raccordement des compartiments définis à l'intérieur des socles 10 de goulotte disposés en angle.

Selon une caractéristique préférentielle du dispositif d'angle plat selon l'invention, la platine 100 est une pièce monobloc moulée dont sont issues notamment la partie centrale 110, chaque partie latérale 120 et chaque liaison souple 123. Avantageusement, ladite partie centrale 110 comprend deux zones 111, 112 reliées par au moins une charnière 113 et une desdites zones 112 est prise en sandwich entre une branche 122 de chaque partie latérale 120 et au moins une nervure 127 portée par celle-ci. Il est prévu ici deux nervures 127 par branche 122 de chaque partie latérale 120, chaque couple de nervures 127 étant disposé au dos du talon souple 124 porté par la branche 122 correspondante.

Ainsi la platine 100 est moulée avec une zone 112 relevée de sorte que les deux zones 111,112 de la partie centrale 110 formant un angle entre elles (voir figure 6). Cela évite avantageusement des mouvements dans l'outillage d'injection ou de moulage. Puis, à l'issue du moulage, la zone 112 relevée de la partie centrale 110 de la platine 100 est rabattue dans le plan de la zone 111 et est maintenue à plat par lesdites nervures 127 portées par lesdites parties latérales 120. Lors de cette mise en place finale de la zone 112 de la partie centrale 110 de la platine 100, les branches 122 des parties latérales 120 mobiles s'écartent l'une de l'autre et reviennent élastiquement l'une vers l'autre de manière à prendre en sandwich ladite zone 112 mise à plat.

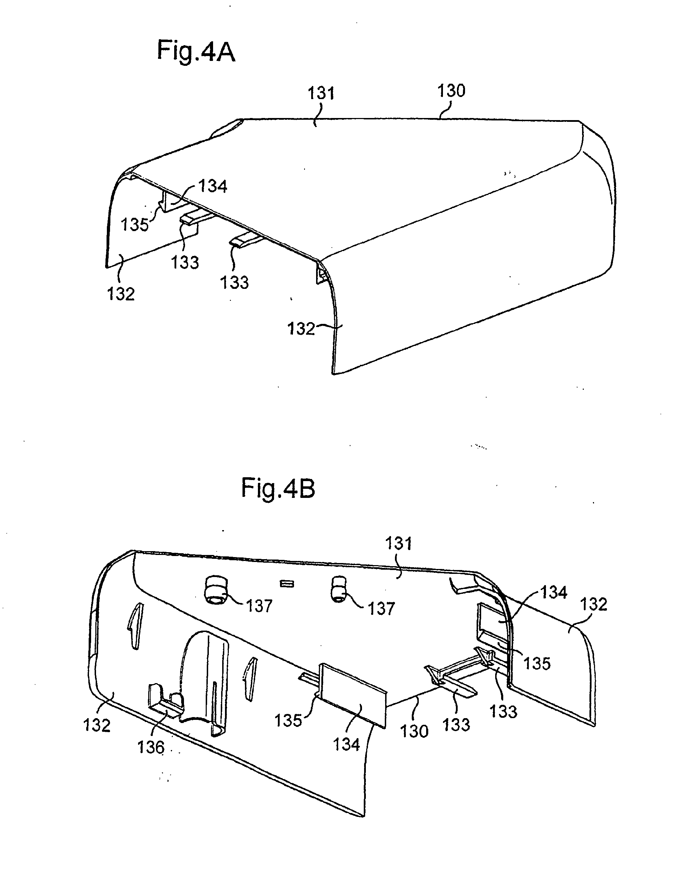

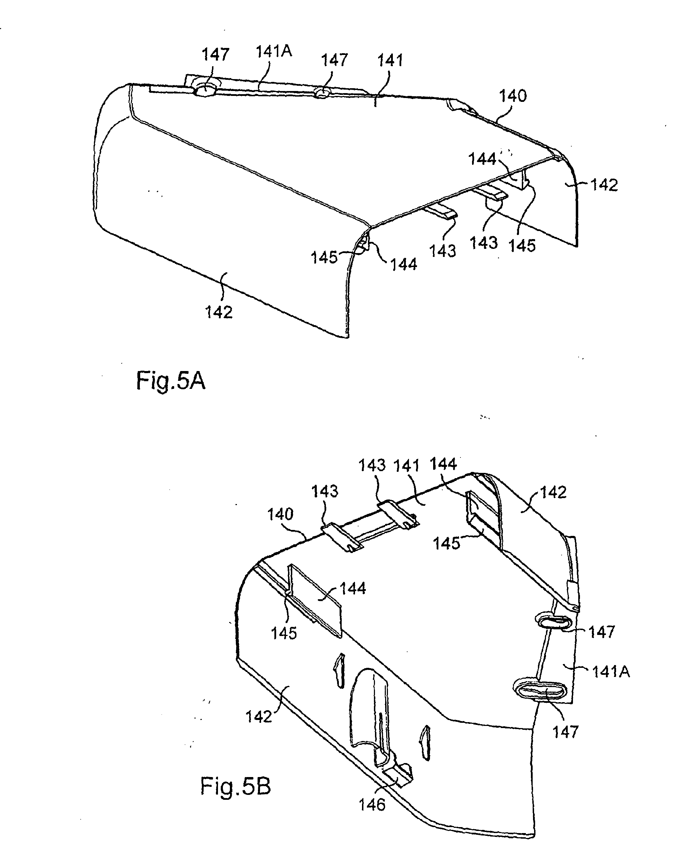

Comme le montrent les figures 4A,4B,5A,5B, le cache du dispositif d'angle plat selon l'invention comporte deux demi-caches 130, 140. Chaque demi-cache 130,140 comprend une paroi de fermeture 131,141 bordée par deux bords tombants 132,142. Les parois de fermeture 131,141 des deux demi-caches 130,140 assurent une continuité de parois entre les parois de fermeture des couvercles de fermeture des socles 10 de goulotte en en recouvrant le bord coupé et les bords tombants 132,142 desdits demi-caches assurent une continuité de parois entre les bords tombants des couvercles de fermeture des socles 10 en en recouvrant les bords coupés.

Comme le montrent les figures 4A,4B,5A,5B, chaque paroi de fermeture 131, 141 de chaque demi-cache 130,140 comprend en saillie de son bord venant recouvrir le bord coupé de la paroi de fermeture du couvercle de fermeture du socle 10 correspondant, des languettes 133,143 destinées à venir s'appuyer contre la face interne dudit couvercle de fermeture.

En outre, la paroi de fermeture 131 d'un des demi-caches 130 porte sur sa face interne tournée vers la platine 100, à proximité de son autre bord situé à l'opposé du bord portant lesdites languettes 133, des tétons 137. En correspondance, l'autre demi-cache 140 comprend sur son autre bord situé à l'opposé du bord portant lesdites languettes 143, une plate-forme 141A pourvue d'orifices oblongs 147. Les tétons 137 du demi-cache 130 sont destinés à s'insérer dans les orifices oblongs 147 du demi-cache 140 pour solidariser les deux demi-caches 130,140 l'un à l'autre.

Avantageusement, le cache 130,140 et ladite platine 100 du dispositif d'angle plat comportent des moyens d'encliquetage 136,146,126 complémentaires adaptés à coopérer entre eux pour être solidarisés l'un à l'autre. Chaque demi-cache 130,140 comprend lesdits moyens d'encliquetage 136,146 adaptés à coopérer avec les moyens d'encliquetage 126 de la platine 100. Ici les moyens d'encliquetage de la platine 100 comprennent deux dents 126, chaque dent 126 appartenant à la branche 122 libre de chaque partie latérale 120 de la platine 100. Les moyens d'encliquetage prévus sur les demi-caches 130,140 comprennent deux dents 136,146 portées chacune par la face interne du bord tombant 132,142 correspondant de chaque demi-cache 130,140.

En outre, ledit cache 130,140 comporte d'autres moyens d'encliquetage 134,135,144,145 équivalents à ceux d'un couvercle de fermeture de socle de goulotte adaptés à coopérer avec les bourrelets d'encliquetage 13B prévus dans les retours 13 d'ailes latérales 12 des socles 10 de goulotte. Ici, ces moyens d'encliquetage comprennent pour chaque demi-cache 130,140 une languette 144 qui s'étend perpendiculairement à la face interne de la paroi de fermeture 131,141 du demi-cache 130,140 et qui porte à son extrémité libre une dent d'accrochage 135,145.

Lorsque la platine 100 est placée entre les deux socles 10 disposés en angle sur le plan support, les parties latérales 120 de ladite platine 100 glissent par rapport à la partie centrale 110 de manière que le bord 121A de la branche 121 correspondante de chaque partie latérale 120 vienne s'appuyer automatiquement contre le bord coupé 11A du socle 10 de goulotte correspondant. De cette manière, la platine 100 permet d'assurer une parfaite continuité entre les fonds 11 des socles 10 même si ceux-ci ne sont pas disposés exactement à 90 degrés l'un par rapport à l'autre mais par exemple forment un angle compris entre 80 et 100 degrés. Les languettes 125,128 de la platine 100 solidaires desdites parties latérales 120 prennent appui contre les parties internes correspondantes des socles 10 de manière que la platine soit maintenue en position par rapport auxdits socles 10 avant sa fixation au plan support. Les talons souples 124 de la platine 100 viennent éventuellement en appui contre une paroi 1 s'élevant à la perpendiculaire du plan support en laissant un espace suffisant entre la platine 100 et ladite paroi 1 pour encliqueter les demi-caches 130,140 sur ladite platine 100 et sur lesdits socles 10 (voir figures 6 et 7).

La présente invention n'est nullement limitée au mode de réalisation décrit et représenté, mais l'homme du métier saura y apporter toute variante dans le cadre des revendications.

## Revendications

1. Dispositif d'angle plat ou de dérivation à disposer entre les socles (10) d'au moins deux tronçons de goulotte formant entre eux un angle dans un même plan support, ce dispositif comprenant une platine (100) pour joindre les fonds (11) desdits socles (10) qui comporte une partie centrale (110) et au moins une partie latérale (120) rattachée à la partie centrale (110) par au moins une liaison souple (123) pour être mobile par rapport à ladite partie centrale (110), **caractérisé en ce que** ladite partie centrale (110) comprend des aménagements (114,115) pour être fixée au plan support et **en ce que** ladite platine (100) est agencée pour que ladite partie latérale (120) reste mobile par rapport à ladite partie centrale (110) après fixation de celle-ci au plan support de sorte qu'elle est apte à se plaquer automatiquement contre un bord coupé (11A) d'un desdits socles (10).

2. Dispositif selon la revendication 1, **caractérisé en ce qu'**il est prévu deux parties latérales (120) mobiles situées sur les deux côtés latéraux de la partie centrale (110).

3. Dispositif selon l'une des revendications 1 ou 2, **caractérisé en ce que** chaque partie latérale (120) est rattachée à la partie centrale (110) par deux liaisons souples (123).

4. Dispositif selon l'une des revendications 1 à 3, **caractérisé en ce que** la platine (100) est une pièce monobloc moulée dont sont issues la partie centrale (110), chaque partie latérale (120) et chaque liaison souple (123).

5. Dispositif selon l'une des revendications 1 à 4, **caractérisé en ce que** chaque partie latérale (120) présente une forme en L dont une (121) des branches, rattachée par chaque liaison souple (123) à ladite partie centrale (110), est adaptée à se plaquer automatiquement contre un bord coupé (11A) d'un desdits socles (10).

6. Dispositif selon l'une des revendications 1 à 5, **caractérisé en ce que** ladite platine (100) porte des talons souples (124) destinés à venir en appui contre une paroi (1) disposée en équerre par rapport audit plan support.

7. Dispositif selon l'une des revendications 1 à 6, **caractérisé en ce que** ladite partie centrale (110) comporte des trous de fixation (115) prévus dans le fond de bossages (114) faisant saillie sur la face arrière de ladite partie centrale (110).

8. Dispositif selon l'une des revendications 1 à 7, **caractérisé en ce que** chaque liaison souple (123) est réalisée par une patte en forme de U inversé.

9. Dispositif selon l'une des revendications 1 à 8, **caractérisé en ce qu'**il comporte un cache (130,140) à rapporter sur ladite platine (100), le cache (130,140) et ladite platine (100) comportant des moyens d'encliquetage (136,146,126) complémentaires adaptés à coopérer entre eux.

10. Dispositif selon la revendication 9, **caractérisé en ce que** ledit cache est constitué de deux demi-caches (130,140) comprenant chacun lesdits moyens d'encliquetage (136,146) adaptés à coopérer avec ceux de la platine (100).

11. Dispositif selon l'une des revendications 9 ou 10, **caractérisé en ce que** ledit cache (130,140) comporte d'autres moyens d'encliquetage (135,145) équivalents à ceux d'un couvercle de fermeture adaptés à coopérer avec des moyens de montage (13B) prévus dans les retours (13) d'ailes latérales (12) des socles (10) de goulotte.

12. Dispositif selon l'une quelconque des revendications précédentes, **caractérisé en ce que** ladite partie centrale (110) comprend deux zones (111,112) reliées par au moins une charnière (113) et une (113) desdites zones est prise en sandwich entre une branche (122) de chaque partie latérale (120) et au moins une nervure (127) portée par celle-ci.

## Claims

1. A flat angle or branch connection device for placing between the bases (10) of at least two duct segments forming an angle between each other in a common support plane, the device comprising a plate (100) for joining together the bottoms (11) of said bases (10), which plate includes a central portion (110) and at least one lateral portion (120) attached to the central portion (110) via at least one flexible connection (123) so as to be movable relative to said central portion (110), the device being **characterized in that** said central portion (110) includes arrangements (114, 115) for being fastened to the support plane, and **in that** said plate (100) is arranged so that said lateral portion (120) remains movable relative to said central portion (110) after it has been fastened to the support plane, such that it is suitable for pressing automatically against the cut edge (11A) of one of said bases (10).

2. A device according to claim 1, **characterized in that** it is provided with two movable lateral portions (120) situated on both lateral sides of the central portion (110).

3. A device according to claim 1 or claim 2, **characterized in that** each lateral portion (120) is attached to the central portion (110) by two flexible connections (123).

4. A device according to any one of claims 1 to 3, **characterized in that** the plate (100) is a one-piece molding of which the central portion (110), each lateral portion (120), and each flexible connection (123) form parts.

5. A device according to any one of claims 1 to 4, **characterized in that** each lateral portion (120) presents an L-shape with one of its branches (121) being attached by each of the flexible connections (123) to said central portion (110), said one of its branches being suitable for pressing automatically against a cut edge (11A) of one of said bases (10).

6. A device according to any one of claims 1 to 5, **characterized in that** said plate (100) has flexible lugs (124) for coming to bear against a wall (1) disposed at right angles relative to said support plane.

7. A device according to any one of claims 1 to 6, **characterized in that** said central portion (110) includes fastener holes (115) provided in the bottoms of bulges (114) projecting from the rear face of said central portion (110).

8. A device according to any one of claims 1 to 7, **characterized in that** each flexible connection (123) is constituted by a tab of upside-down U-shape.

9. A device according to any one of claims 1 to 8, **characterized in that** it includes a cover (130, 140) for fitting on said plate (100), the cover (130, 140) and said plate (100) including complementary snap-fastener means (136, 146, 126) adapted to co-operate with one another.

10. A device according to claim 9, **characterized in that** said cover is constituted by two half-covers (130, 140), each including said snap-fastener means (136, 146) adapted to co-operate with the snap-fastener means of the plate (100).

11. A device according to claim 9 or claim 10, **characterized in that** said cover (130, 140) includes other snap-fastener means (135, 145) equivalent to those of a closure lid adapted to co-operate with the assembly means (13B) provided in the rims (13) of the flanges (12) of the duct bases (10).

12. A device according to any preceding claim, **characterized in that** said central portion (110) comprises two zones (111, 112) connected together by at least one hinge (113), and one of said zones (112) is sandwiched between a branch (122) of each lateral portion (120) and at least one rib (127) carried thereby.

## Patentansprüche

1. Flache Winkelvorrichtung bzw. zwischen den Sockeln (10) von mindestens zwei Kabelkanalabschnitten, die zueinander einen Winkel in derselben Trägerebene bilden, anzubringende Vorrichtung für den Leitungsanschluss, wobei diese Vorrichtung eine Platine (100) umfasst, um die Böden (11) der Sockel (10) miteinander zu verbinden, welche ein Mittelteil (110) und mindestens ein Seitenteil (120) umfasst, das durch mindestens eine flexible Verbindung (123) mit dem Mittelteil (110) verbunden ist, um in Bezug auf das Mittelteil (110) beweglich zu sein, **dadurch gekennzeichnet, dass** das Mittelteil (110) Ausstattungen (114, 115) umfasst, um auf der Trägerebene fixiert zu werden und dadurch, dass die Platine (100) so angeordnet ist, dass das Seitenteil (120) in Bezug zum Mittelteil (110) nach Befestigen von diesem auf der Trägerebene beweglich bleibt, sodass es automatisch gegen einen abgeschnittenen Rand (11A) eines der Sockel (10) drücken kann.

2. Vorrichtung nach Anspruch 1, **dadurch gekennzeichnet, dass** zwei bewegliche Seitenteile (120) an den zwei Seiten des Mittelteils (110) vorgesehen sind.

3. Vorrichtung nach einem der Ansprüche 1 oder 2, **dadurch gekennzeichnet, dass** jedes Seitenteil (120) durch zwei flexible Verbindungen (123) mit dem Mittelteil (110) verbunden ist.

4. Vorrichtung nach einem der Ansprüche 1 bis 3, **dadurch gekennzeichnet, dass** die Platine (100) ein spritzgegossenes Teil aus einem Stück ist, aus dem das Mittelteil (110), jedes Seitenteil (120) und jede flexible Verbindung (123) hervorgehen.

5. Vorrichtung nach einem der Ansprüche 1 bis 4, **dadurch gekennzeichnet, dass** jedes Seitenteil (120) eine L-Form hat, wobei sich einer (121) der Schenkel, der über die jeweilige flexible Verbindung (123) am Mittelteil (110) angebunden ist, dazu eignet, automatisch gegen einen abgeschnittenen Rand (11A) eines der Sockel (10) zu drücken.

6. Vorrichtung nach einem der Ansprüche 1 bis 5, **dadurch gekennzeichnet, dass** die Platine (100) flexible Stege (124) trägt, die dazu bestimmt sind, gegen eine Wand (1) zu drücken, die in Bezug zur Trägerebene rechtwinkelig angeordnet ist.

7. Vorrichtung nach einem der Ansprüche 1 bis 6, **dadurch gekennzeichnet, dass** das Mittelteil (110) im Boden der Naben (114), die auf der Rückseite des Mittelteils (110) überstehen, Befestigungslöcher (115) aufweist.

8. Vorrichtung nach einem der Ansprüche 1 bis 7, **dadurch gekennzeichnet, dass** jede flexible Verbindung (123) durch eine Klammer in Form eines umgekehrten U realisiert wird.

9. Vorrichtung nach einem der Ansprüche 1 bis 8, **dadurch gekennzeichnet, dass** sie eine Abdeckung (130, 140) umfasst, die an der Platine (100) anzubringen ist, wobei die Abdeckung (130, 140) und die Platine (100) ergänzende Einrastmittel (136, 146, 126) umfassen, die sich dazu eignen, zusammenzuwirken.

10. Vorrichtung nach Anspruch 9, **dadurch gekennzeichnet, dass** die Abdeckung aus zwei halben Abdeckungen (130, 140) besteht, die beide die besagten Einrastmittel (136, 146) umfassen, welche sich dazu eignen, mit denen der Platine (100) zusammenzuwirken.

11. Vorrichtung nach einem der Ansprüche 9 oder 10, **dadurch gekennzeichnet, dass** die Abdeckung (130, 140) andere Einrastmittel (135, 145) umfasst, die mit denen eines Verschlussdeckels gleichwertig sind und sich dazu eignen, mit Montagemitteln (13B) in den Rückführungen (13) der Seitenschenkel (12) der Kabelkanalsockel (10) zusammenzuwirken.

12. Vorrichtung nach einem beliebigen der vorausgehenden Ansprüche, **dadurch gekennzeichnet, dass** das Mittelteil (110) zwei durch mindestens ein Scharnier (113) verbundene Abschnitte (111, 112) umfasst und einer (112) dieser Abschnitte in einer Sandwichkonstruktion zwischen einem Schenkel (122) jedes Seitenteils (120) und mindestens einer Rippe (127) auf diesem Seitenteil eingeklemmt ist.
